Europäisches Patentamt

European Patent Office

Office européen des brevets

(19)

(11) EP 0 670 487 B1

## (12) FASCICULE DE BREVET EUROPEEN

(45) Date de publication et mention
de la délivrance du brevet:
**13.01.1999 Bulletin 1999/02**

(51) Int Cl.$^6$: **G01N 21/39**

(21) Numéro de dépôt: **95102825.7**

(22) Date de dépôt: **28.02.1995**

(54) **Procédé et dispositif de détermination de l'absorption d'un rayonnement électromagnétique par un gaz**

Verfahren und Vorrichtung zur Bestimmung der Absorption einer elektromagnetischen Strahlung durch ein Gas

Method and device for the determining of the absorption of an electromagnetic radiation by a gas

(84) Etats contractants désignés:
**AT BE CH DE DK ES FR GB GR IE IT LI LU MC NL PT SE**

(30) Priorité: **03.03.1994 FR 9402578**

(43) Date de publication de la demande:
**06.09.1995 Bulletin 1995/36**

(73) Titulaire: **SCHLUMBERGER INDUSTRIES S.A. 92120 Montrouge (FR)**

(72) Inventeur: **Grasdepot, François F-92260 Fontenay-aux-Roses (FR)**

(56) Documents cités:
**WO-A-87/07018**     **US-A- 3 832 061**
**US-A- 4 410 273**

- **APPLIED OPTICS, vol.32, no.30, 20 Octobre 1993 pages 6104 - 6116 ARROYO ET AL. 'ABSORPTION MEASUREMENTS OF WATER VAPOR,ETC.'**
- **REVIEW OF SCIENTIFIC INSTRUMENTS, vol.60, no.5, 1 Mai 1989 pages 858 - 862 DEPIANTE ET AL. 'PULSED MOLECULAR BEAM DIODE LASER SPECTROMETRY,ETC.'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention est relative à un procédé de détermination de l'absorption d'un rayonnement électromagnétique de longueur d'onde variable sur une gamme de longueurs d'ondes par un gaz qui présente une absorption sélective de ce rayonnement sur ladite gamme de longueurs d'ondes ainsi qu'à un dispositif pour la mise en oeuvre de ce procédé.

Il est connu que certains gaz absorbent de manière sélective un rayonnement électromagnétique en fonction de la longueur d'onde dudit rayonnement lorsque ces corps présentent une structure de raies relativement fines et séparées et non une structure de bande.

Cette propriété est utilisée pour déterminer l'absorption de ces corps et donc pour en déduire leur concentration.

Il est fréquent de chercher à déterminer la concentration d'un gaz dans un mélange d'autres gaz sans procéder à des analyses qui nécessitent un contact physique avec le fluide. Ce type d'analyse n'est d'ailleurs pas toujours aisé lorsque l'on veut par exemple détecter rapidement une fuite de gaz.

On connaît diverses méthodes physiques de détermination de la concentration d'un gaz possédant une absorption sélective d'un rayonnement électromagnétique sur une gamme de longueurs d'ondes de ce rayonnement.

Ces méthodes physiques permettent d'effectuer une mesure sans contact avec le gaz par opposition aux mesures chimiques et présentent en outre une bonne sélectivité.

On connaît par exemple une méthode fiable basée sur un interféromètre à transformée de Fourier et qui consiste à déterminer l'ensemble des caractéristiques d'absorption du gaz sur un grand domaine de longueurs d'ondes optiques. Toutefois, cette méthode est très complexe.

Il est également connu de moduler la longueur d'onde d'émission d'une diode laser (en modulant le courant d'injection et/ou la température du laser) sur un domaine de longueurs d'ondes incluant une raie d'absorption d'un gaz dont on souhaite déterminer la concentration et de faire passer le rayonnement optique modulé émis par la diode laser à travers une cellule remplie de gaz. Un détecteur optique permet alors de recueillir le rayonnement optique d'amplitude variable qui est caractéristique du gaz et de sa concentration.

Or, ce rayonnement est généralement constitué par un rayonnement dû à la modulation du laser sur lequel se superposent des pics dus à l'absorption différentielle du gaz (ces deux rayonnements étant atténués par des pertes constantes en fonction de la longueur d'onde et qui sont dues à des opacités diverses rencontrées par le rayonnement optique modulé provenant de la diode laser) et il n'est donc pas possible d'isoler la seule contribution du gaz dans ledit rayonnement.

On connaît une méthode citée dans l'article "Absorption measurements of water-vapor concentration, temperature and line-shape parameters using a tunable In-GaAsp diode laser" APPLIED OPTICS, Vol. 32, No. 30 p.6104-6116, 20 October 1993 et qui permet de déterminer par voie optique la concentration de la vapeur d'eau en s'affranchissant de certains des problèmes précités.

Selon cette méthode, on utilise une diode laser dont on module la longueur d'onde d'émission en modulant le courant d'injection et/ou la température du laser et l'on choisit un domaine de longueurs d'ondes qui couvre la gamme de longueurs d'ondes pour laquelle la vapeur d'eau présente une absorption différentielle.

Cette diode laser émet un rayonnement optique modulé qui est ensuite séparé en deux rayonnements optiques modulés, l'un servant de rayonnement de référence et l'autre traversant une cellule remplie d'un mélange gazeux contenant de la vapeur d'eau dont la concentration est à déterminer et faisant office de rayonnement de mesure.

En sortie de la cellule de gaz, un détecteur de rayonnement optique recueille le rayonnement optique de mesure d'amplitude variable caractéristique de la vapeur d'eau et de sa concentration et le transforme en signal électrique de mesure. Le rayonnement de référence est également recueilli par un autre détecteur de rayonnement optique et est transformé en signal électrique de référence.

La méthode décrite consiste ensuite à soustraire le signal de mesure au signal de référence et à diviser le signal électrique obtenu par le signal de référence pour en déduire l'absorption du rayonnement optique par la vapeur d'eau et ainsi la concentration de celle-ci.

Néanmoins, cet article mentionne que pour obtenir une mesure fiable de l'absorption, il faut parfaitement équilibrer l'amplitude des deux signaux électriques issus des détecteurs de rayonnement optique.

En effet, la moindre différence dans leur gain d'amplification entraîne une distorsion de la mesure de l'absorption.

En outre, dans l'intervalle de temps qui sépare l'équilibrage des signaux de la mesure de l'absorption, toute modification des pertes optiques est confondue avec une variation de ladite absorption au détriment de la métrologie.

Il est d'ailleurs précisé dans cet article que plusieurs voies ont été empruntées afin de parfaitement équilibrer les signaux électriques issus des détecteurs de rayonnement optique mais aucune n'a cependant donné entière satisfaction. Ce problème est en fait général aux méthodes de mesure d'absorption de l'art antérieur et l'on peut affirmer que les méthodes connues de l'état de la technique ne permettent pas de déterminer simplement et de manière fiable l'absorption et donc la concentration d'un gaz qui présente une absorption sélective dans une gamme donnée de longueurs d'ondes d'un rayonnement électromagnétique car elles ne parviennent pas à être insensibles aux pertes parasites inévitables.

La présente invention vise donc à remédier à ces inconvénients en proposant un procédé de détermination de l'absorption d'un rayonnement électromagnétique de longueur d'onde variable sur une gamme de longueurs d'onde par un gaz présentant une absorption sélective de ce rayonnement sur ladite gamme de longueurs d'ondes et un dispositif pour la mise en oeuvre dudit procédé qui soient simples et indépendants des pertes et des atténuations parasites affectant les rayonnements électromagnétiques et les signaux électriques. La présente invention a ainsi pour objet un procédé de détermination de l'absorption d'un rayonnement électromagnétique de longueur d'onde variable sur une gamme de longueurs d'ondes par un gaz qui présente une absorption sélective de ce rayonnement sur ladite gamme de longueurs d'ondes, ledit procédé consistant successivement à:

- produire deux rayonnements électromagnétiques de même longueur d'onde modulée en fonction du temps sur la gamme de longueurs d'ondes, l'un desdits rayonnements électromagnétiques dit de mesure traversant ledit gaz, l'autre rayonnement électromagnétique étant dit de référence,
- détecter chacun des rayonnements électromagnétiques de mesure et de référence et les transformer en signaux électriques respectivement dits de mesure Mes(t) et de référence Ref(t), caractérisé en ce que ledit procédé consiste alors à diviser ledit signal électrique de mesure Mes(t) par ledit signal électrique de référence Ref(t) afin d'obtenir un premier signal électrique de division Div1(t) constitué d'une partie AC variable avec le temps et d'une partie DC non variable avec le temps, a séparer lesdites parties AC et DC et à diviser la partie AC du premier signal électrique de division Div1(t) par la partie DC de ce même signal afin d'obtenir un second signal électrique de division Div2(t) représentant uniquement l'absorption du rayonnement électromagnétique par ce gaz.

Le procédé selon l'invention est donc très simple à réaliser et permet de s'affranchir des pertes et atténuations parasites affectant les rayonnements électromagnétiques et les signaux électriques. Le signal électrique ainsi obtenu représente une grandeur directement reliée à la concentration du gaz ce qui est aisément exploitable pour déterminer avec précision ladite concentration de ce gaz.
On obtient ainsi de meilleurs résultats que dans l'art antérieur tout en utilisant des techniques bien plus simples que celles déjà proposées.
Selon l'invention:

- les rayonnements électromagnétiques ont des amplitudes dont le rapport est constant en fonction du temps;
- on produit deux rayonnements électromagnétiques à partir d'une source qui émet un rayonnement électromagnétique de base et l'on sépare ledit rayonnement électromagnétique de base afin d'obtenir lesdits rayonnements électromagnétiques de mesure et de référence;
- le rayonnement électromagnétique est un rayonnement optique;
- la source optique est une diode laser modulée en courant d'injection et/ou en température;
- on sépare les parties AC et DC par filtrage électrique.

La présente invention a également pour objet un dispositif de détermination de l'absorption d'un rayonnement électromagnétique de longueur d'onde variable sur une gamme de longueurs d'ondes par un gaz qui présente une absorption sélective de ce rayonnement sur ladite gamme de longueurs d'ondes pour la mise en oeuvre du procédé précédemment décrit et comprenant

- des moyens de production de deux rayonnements électromagnétiques de même longueur d'onde modulée en fonction du temps sur la gamme de longueurs d'ondes, l'un desdits rayonnements électromagnétiques dit de mesure traversant ledit gaz, l'autre rayonnement électromagnétique étant dit de référence,
- des moyens de détection de chacun des rayonnements électromagnétiques de mesure et de référence et de transformation de ces rayonnements en signaux électriques respectivement dits de mesure et de référence,

caractérisé en ce que ledit dispositif comprend en outre

- des premiers moyens de division du signal électrique de mesure par le signal électrique de référence afin d'obtenir un premier signal électrique de division constitué d'une partie AC variable avec le temps et d'une partie DC non variable avec le temps,
- des moyens de séparation des parties AC et DC du premier signal électrique de division,
- et des second moyens de division de la partie AC dudit premier signal électrique de division par la partie DC de ce même signal afin d'obtenir un second signal électrique de division représentant uniquement l'absorption du rayonnement électromagnétique par ce gaz.

Ce dispositif présente l'avantage d'être particulièrement simple de conception et ne nécessite pas de moyens électroniques complexes, encombrants et coûteux.
Selon l'invention, les moyens de production des deux rayonnements électromagnétiques comprennent une source émettant un rayonnement électromagnétique de base et des moyens de séparation dudit rayonnement de base pour obtenir lesdits rayonnements électromagnétiques de mesure et de référence. Le rayonnement électromagnétique est un rayonnement optique.

Les moyens de séparation sont formés par une lame de verre disposée sur le trajet du rayonnement optique de base suivant une inclinaison avec ce rayonnement et possédant de préférence sur une de ses faces recevant ce signal un dépôt métallique semi-transparent en vue d'augmenter la réflexion de ladite face.

La source est une diode laser munie d'un système de modulation de la longueur d'onde optique du rayonnement optique de base par modulation du courant d'injection et/ou de la température.

Les moyens de détection des rayonnements optiques de mesure et de référence et de transformation de ces rayonnements en signaux électriques sont formés par des photodiodes de même type.

Selon d'autres caractéristiques de l'invention:

- les moyens de séparation des parties AC et DC du premier signal électrique de division comprennent un premier filtre électrique pour sélectionner la partie AC dudit signal et un second filtre électrique pour sélectionner la partie DC de ce signal.
- le premier filtre électrique est constitué d'une capacité en série et d'une résistance en parallèle formant un filtre passe -haut.
- le second filtre électrique est constitué d'une résistance en série et d'une capacité en parallèle formant un filtre passe-bas.

L'invention trouve une application particulièrement intéressante lorsque l'on cherche à déterminer la concentration d'un gaz spécifique tel que le méthane ou le monoxyde de carbone dans un mélange d'autres gaz, par exemple à des fins de facturation, ou bien lorsque l'on souhaite détecter une fuite de ce gaz.

La détermination de l'absorption d'un rayonnement optique par un gaz conformément à l'invention permet alors facilement d'en déduire une valeur métrologique fiable de la concentration du gaz et ce, indépendamment du fait que la concentration dudit gaz est faible ou forte.

D'autres caractéristiques et avantages apparaîtront au cours de la description qui va suivre donnée à titre d'exemple non limitatif et faite en se référant aux dessins annexés sur lesquels:

- la figure 1 est une vue d'ensemble des différents éléments constituant le dispositif selon l'invention,
- la figure 2 représente le signal électrique correspondant au rayonnement optique d'émission modulé,
- la figure 3 représente le signal électrique correspondant au rayonnement optique de mesure après la traversée de la cellule de gaz,
- la figure 4 représente le signal électrique correspondant au rayonnement optique de référence,

- la figure 5 représente le premier signal électrique de division,
- les figures 6a et 6b représentent respectivement un filtre passe-haut et un filtre passe-bas destinés à sélectionner les parties AC variable avec le temps et DC non-variable avec le temps du premier signal électrique de division,
- la figure 7 représente la partie AC du premier signal électrique de division,
- la figure 8 représente la partie DC du premier signal électrique de division,
- la figure 9 représente le second signal électrique de division,
- la figure 10 représente une raie d'absorption optique du méthane,
- la figure 11 représente pour le méthane la valeur Rms du signal d'absorption en fonction de la concentration dudit gaz,
- la figure 12 représente le signal de la figure 2 modifié au cours du temps,
- la figure 13 représente le signal de la figure 3 modifié au cours du temps.

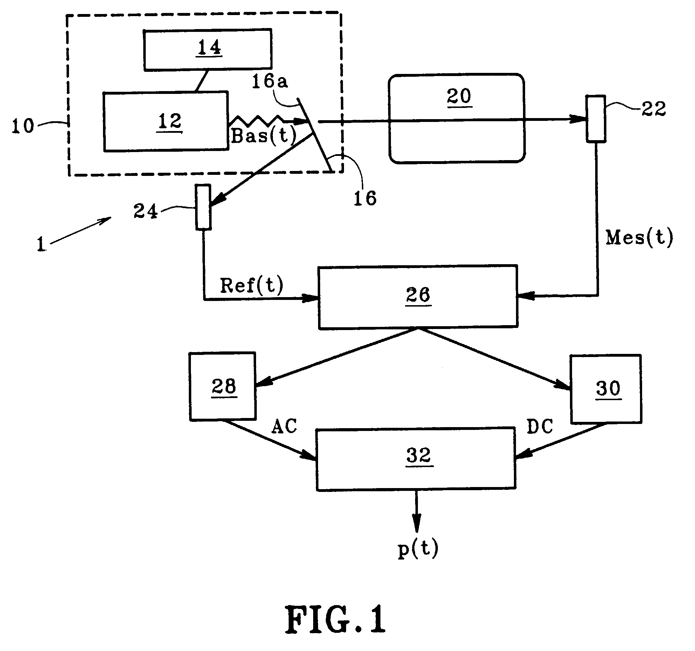

Comme représenté à la figure 1 et désigné dans son ensemble par la référence générale notée 1, le dispositif selon l'invention s'applique au méthane qui présente une absorption sélective d'un rayonnement optique de longueur d'onde variable sur une gamme de longueurs d'ondes optiques. La gamme de longueurs d'ondes optiques est choisie de manière à contenir au moins une longueur d'onde $\lambda 0$ pour laquelle le méthane possède une raie d'absorption. Cette longueur d'onde $\lambda 0$ est par exemple égale à 1,333 µm et la gamme de longueur d'ondes couvre par exemple les longueurs d'ondes s'étendant de

$\lambda 0 - \Delta\lambda = 1,332 \mu m$ à $\lambda_0 + \Delta\lambda = 1,334 \mu m$.

Ce dispositif comprend des moyens 10 de production de deux rayonnements optiques: l'un est appelé rayonnement optique de mesure, noté Mes(t), l'autre est appelé rayonnement optique de référence et noté Ref (t). Ces deux rayonnements optiques proviennent d'un rayonnement optique de base Bas(t) émis par une source optique qui est par exemple une diode laser 12 monomode classique. La diode laser 12 est par exemple équipée d'un système 14 de référence OEM DYLOR LT20-200 et commercialisé par la société LASER 2000 permettant d'alimenter ladite diode et de moduler de façon variable dans le temps la longueur d'onde d'émission de cette diode sur la gamme de longueurs d'ondes optiques mentionnée ci-dessus. Le système 14 de modulation maintient la température de la diode laser constante tandis que l'intensité du courant électrique dans la jonction de la diode est modulée autour d'une valeur prédéfinie $i_0$ par exemple égale à 50mA avec une amplitude $\Delta i$ fonction du temps et périodique, de période T = 0,1 ms : $i(t) = i_0 + \Delta i(t)$. La valeur de l'amplitude maximale de $\Delta i(t)$ est par exemple égale à 30mA. L'allure du signal représentant le courant électrique est par exemple en dents de scie.

La longueur d'onde λ du rayonnement optique de base Bas(t) émis par la diode laser et l'énergie E de ce rayonnement sont également fonction du temps, périodiques et de même période T.

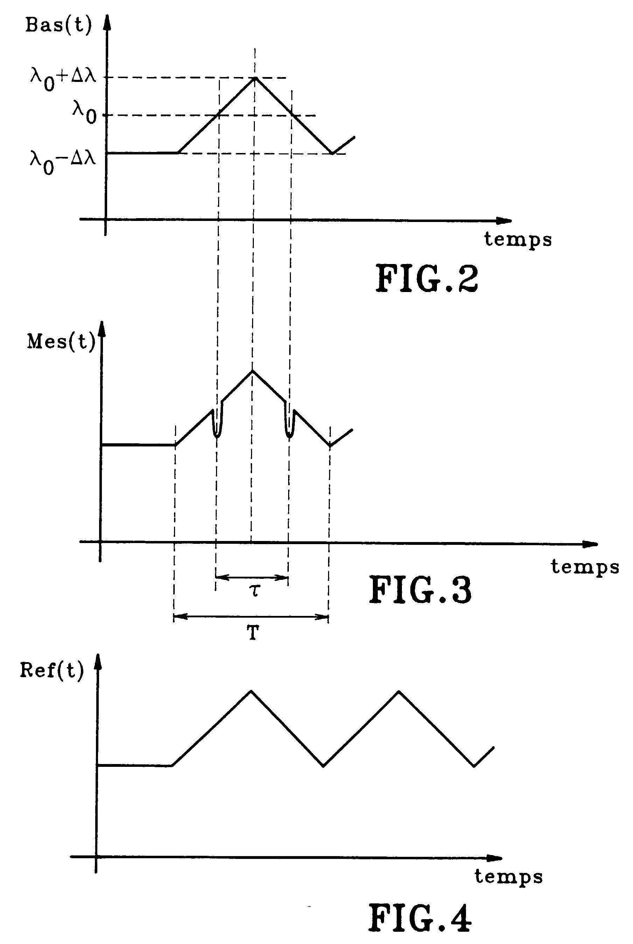

La figure 2 représente l'allure du signal électrique correspondant au rayonnement optique de base modulé Bas(t).

Le rayonnement optique de base modulé Bas(t) est ensuite optiquement séparé par des moyens de séparation optique formés par exemple par une lame de verre semi-transparente 16 dite lame séparatrice disposée sur le trajet dudit rayonnement optique de base tel que représenté sur la figure 1.

La lame de verre présente une inclinaison avec le rayonnement optique de base et est recouverte sur sa face 16a exposée audit rayonnement optique de base d'un dépôt métallique servant à augmenter le pouvoir réflecteur de ladite face.

Par exemple, la lame de verre d'épaisseur égale à 1mm est recouverte d'une mince couche d'or d'épaisseur égale à 60 nm.

Une partie du rayonnement optique de base traverse la lame de verre 16 et donne lieu au rayonnement optique de mesure Mes(t). Pour la clarté de l'exposé, le rayonnement optique de mesure (resp. de référence) et le signal électrique de mesure (resp. de référence) sont désignés par le même terme Mes(t) (resp. Ref.(t)).

Le dispositif selon l'invention comprend également une cellule 22 contenant un mélange de gaz contenant notamment du méthane. Cette cellule est disposée sur le trajet du rayonnement optique de mesure Mes(t) de manière à ce que ledit rayonnement soit affecté par la présence du méthane.

Des moyens de détection optique formés par une photodiode InGaAs 22 recueillent le rayonnement optique de mesure après sa traversée de la cellule 20 et le transforment en signal électrique analogique de mesure dont l'allure est représentée à la figure 3. Une comparaison avec l'allure du signal de la figure 2 fait apparaître des pics inversés superposés au signal de base et qui correspondent à la raie d'absorption du méthane. Le signal électrique de mesure s'exprime de la façon suivante Mes(t) = T . G [λ(t)].

E(t) où T représente l'atténuation optique et électrique totale subie par le rayonnement optique de mesure et le signal de mesure depuis l'émission optique et G représente la transmission optique due au gaz lors de la traversée de la cellule 20.

La transmission optique s'exprime en fonction de l'absorption optique p[λ(t)].

Par conséquent, le signal électrique de mesure s'écrit

$$Mes(t) = T. \ (1-p[λ(t)]) \ . \ E(t)$$

Après la séparation optique, on obtient également le rayonnement optique de référence Ref(t) réfléchi par la face revêtue 16a de la lame de verre et ce rayonnement est ensuite détecté optiquement par des moyens de détection optique formés par exemple par une photodiode InGaAs classique 24 identique à la photodiode 22 et placée sur le trajet du rayonnement optique réfléchi.

Le rayonnement optique de référence est transformé en signal électrique analogique de référence Ref(t) et en sortie de la photodiode 24, ledit signal électrique de référence s'exprime sous la forme suivante Ref(t) = R.E(t) où R désigne l'atténuation optique et électrique totale subie par le rayonnement de référence et le signal de référence depuis l'émission optique. L'allure de ce signal est représentée à la figure 4.

Tel que représenté sur la figure 1, le dispositif selon l'invention comprend des premier moyens de division du signal électrique de mesure par le signal électrique de référence afin d'obtenir un premier signal électrique de division Div1(t). De tels moyens sont par exemple formés par un circuit diviseur analogique classique 26 de référence DIV100KP , commercialisé par la société BURR BROWN.

Il est également possible d'utiliser un convertisseur analogique/numérique pour réaliser cette fonction de division.

L'effet de ce premier diviseur est de réaliser le quotient suivant

$$Div1(t) = \frac{Mes(t)}{Ref(t)} = \frac{T.(1 - p[λ(t)]).E(t)}{R.E(t)}$$

soit Div1(t) = (T/R) - (T/R) p [λ(t)]

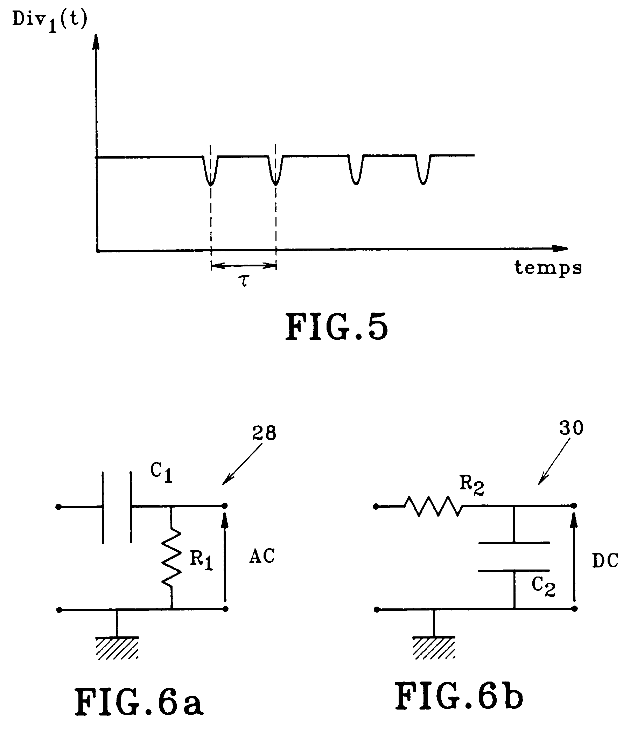

L'allure du premier signal électrique de division Div(t) est représentée à la figure 5 et fait ainsi apparaître les pics inversés représentatifs de l'absorption optique du méthane. Ce premier signal électrique de division comprend deux parties: l'une notée AC et égale à -(T/R)p[λ(t)] est variable avec le temps alors que l'autre partie, notée DC et égale à (T/R) ne varie pas avec le temps.

Le dispositif suivant l'invention prévoit ensuite des moyens pour séparer les parties AC et DC dans le premier signal électrique de division Div1(t).

Ces moyens sont par exemple formés par un premier filtre électrique 28 qui sélectionne uniquement la partie AC du signal Div1(t) et par un second filtre électrique 30 qui sélectionne uniquement la partie DC dudit signal Div1(t).

Comme représenté sur la figure 6a, le premier filtre électrique est par exemple constitué d'une capacité $C_1$ en série de valeur égale à 0,1μF et d'une résistance $R_1$ en parallèle de valeur égale à 1kΩ formant un filtre passe-haut classique.

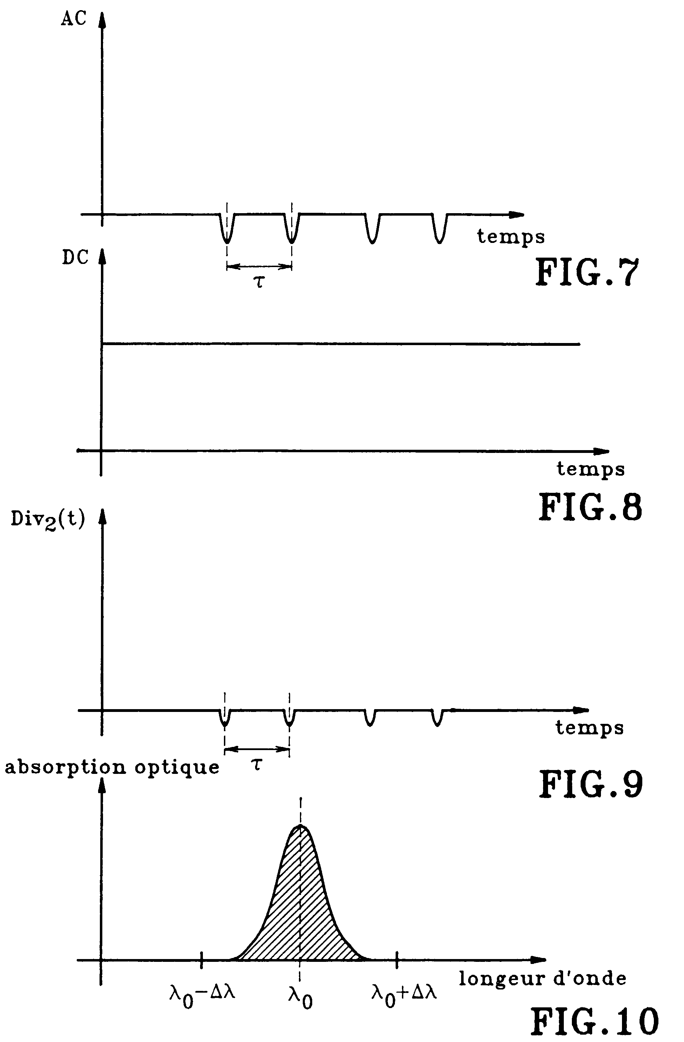

Le signal représentatif de la partie AC est représenté à la figure 7. Le second filtre électrique est par exemple constitué d'une résistance $R_2$ en série de valeur égale à 1 kΩ et d'une capacité $C_2$ en parallèle de valeur égale à 0,1μF formant un filtre passe-bas électrique (Fig 6b).

Le signal représentatif de la partie DC est représenté à la figure 8.

Sans sortir du cadre de la présente invention, il convient de noter que l'on peut également effectuer au moyen d'un premier diviseur une première division du signal de mesure par le signal de référence puis extraire la partie AC du signal électrique de division et, parallèlement, effectuer au moyen d'un second diviseur une seconde division du signal de mesure par le signal de référence puis extraire la partie DC du signal électrique de division.

Comme représenté à la figure 1, le dispositif 1 selon l'invention comprend un dernier élément 32 constitué par des second moyens de division de la partie du premier signal de division Div1(t) qui varie avec le temps, AC, par la partie du même signal qui ne varie pas avec le temps, DC.
On obtient ainsi un second signal électrique de division Div2(t). De tels moyens sont par exemple formés par un circuit diviseur analogique classique 32 de référence DIV100KP commercialisé par la société BURR BROWN.
Il est également possible d'utiliser un convertisseur analogique/numérique pour réaliser cette fonction de division.

L'effet de ce second diviseur est de réaliser le quotient suivant

$$\mathrm{Div2(t)} = \frac{\mathrm{AC}}{\mathrm{DC}} = \left.-(T/R)p[\lambda(t)]\middle/(T/R)\right.$$

soit Div2(t) = -p[λ(t)]
L'allure du second signal électrique de division Div2(t) est représentée à la figure 9.
Ainsi, le signal obtenu Div2(t) représente de façon absolue la contribution p[λ(t)] du gaz rencontrée sur l'ensemble du chemin optique parcouru par le rayonnement optique.

Avantageusement, les valeurs de l'absorption optique sont des valeurs absolues pour les longueurs d'onde λ(t) et sont donc indépendantes de la modulation issue de la diode laser et insensibles à la distorsion de ladite diode laser. Il est ainsi possible de stabiliser la température de la diode laser et l'intensité du courant électrique dans la jonction de manière moins précise que dans l'art antérieur et donc d'utiliser un système 14 d'alimentation et de modulation de la longueur d'onde de la diode laser moins sophistiqué que ceux de l'art antérieur.
Il convient également de noter que le traitement du signal qui est effectué après avoir détecté les rayonnements optiques de mesure et de référence peut également être réalisé de manière numérique.
Dans l'exemple de réalisation précédemment décrit pour le méthane, dès lors que l'on a obtenu un signal représentant uniquement l'absorption optique du gaz, il suffit alors de calculer la valeur dite Rms exprimée ci-dessous au moyen par exemple d'un voltmètre et de multiplier cette valeur Rms par un coefficient de proportionnalité disponible dans des tables de mesure connues pour en déduire la concentration du méthane dans la cellule 20.

$$\mathrm{Rms} = \sqrt{\int_{\lambda_0-\Delta\lambda}^{\lambda_0+\Delta\lambda} p^2[\lambda(t)]\,dt}$$

Il convient de noter que pour la réalisation d'un capteur de gaz, on peut envisager de calculer cette valeur Rms à la sortie du filtre électrique 28 et de diviser ensuite le signal -(T/R)Rms par la partie DC du premier signal électrique de division afin d'obtenir en sortie du diviseur 32 directement la valeur Rms.

Comme représenté sur la figure 10, la valeur Rms correspond en fait à l'aire hachurée sous la courbe représentant l'absorption optique du méthane sur la gamme de longueur d'ondes optiques prédéfinie et qui traduit un pic d'absorption à λo = 1,333μm
L'invention permet ainsi de calculer la concentration d'un gaz avec la même résolution que celle de l'art antérieur mais avec une précision supérieure.

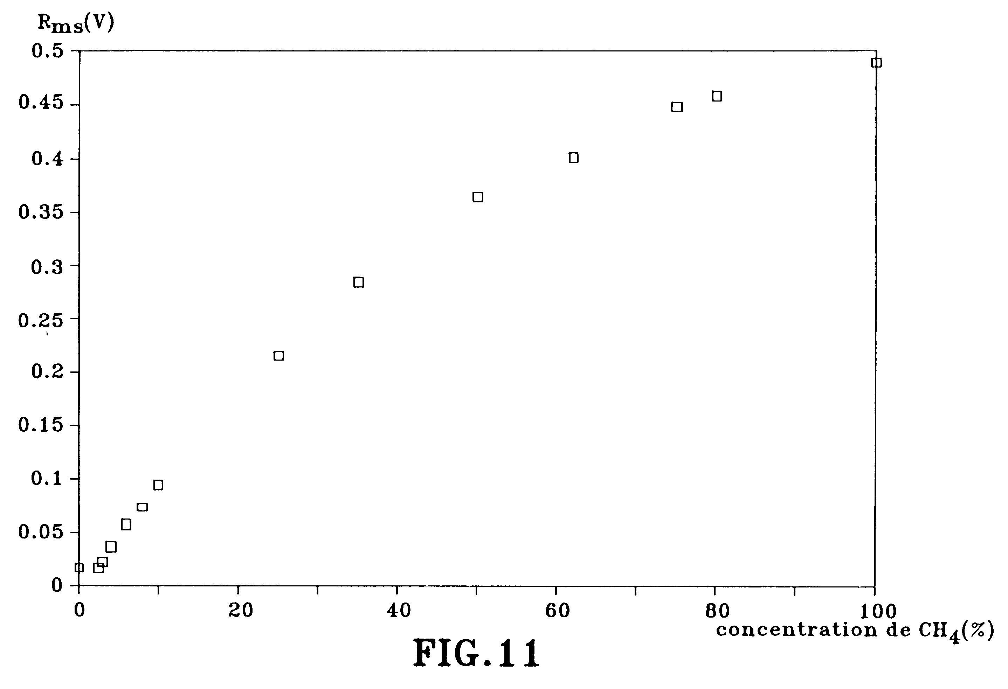

En effet, comme illustré sur la figure 11 qui représente la valeur Rms du signal de sortie du dispositif en fonction de la concentration du gaz (méthane), les valeurs obtenues sur cette courbe sont uniquement attribuables à la mesure de l'absorption. Par contre, en utilisant les techniques de l'art antérieur, on peut obtenir la même courbe que celle de la figure 11 mais on ne peut être assuré de la métrologie des valeurs obtenues sur cette courbe. En outre, le fait de disposer d'une valeur métrologique de la concentration d'un gaz permet par exemple d'estimer rapidement et de manière fiable le pouvoir calorifique de ce gaz. On peut également détecter rapidement une fuite de gaz et par exemple prévoir de déclencher une alarme visuelle et/ou sonore dans un tel cas.
Grâce à l'invention, on s'affranchit également de l'influence de la température et de la pression du gaz.

Par ailleurs, le dispositif selon l'invention présente une stabilité à long terme étant donné qu'il se recalibre en permanence sans aide extérieure, contrairement au dispositif décrit dans le document "Applied Optics" de l'art antérieur où un équilibrage manuel des gains des signaux électriques de mesure et de référence est nécessaire.
De ce fait, le dispositif selon l'invention peut être utilisé avantageusement dans différentes industries et il est possible de l'installer dans des endroits difficiles d'accès où l'on dispose de peu de place et où il n'est pas nécessaire de contrôler son fonctionnement en permanence. On peut aussi l'exposer à des environnements sévères (pollution, vibrations, ... ) sans risquer d'affecter la métrologie des mesures effectuées.

Tel que représenté sur les figures 3, 5, 7 et 9, le temps τ séparant deux pics d'absorption consécutifs ne varie pas pour un même signal mais, par contre, peut varier dans le temps pour diverses raisons liées au fonctionnement de la diode laser.

Dans les techniques classiques, cette variation constitue un inconvénient car elle affecte la métrologie de la mesure, et le dispositif cité dans le document "Applied Optics" y remédie en asservissant la longueur d'onde d'émission du laser sur la raie du gaz.

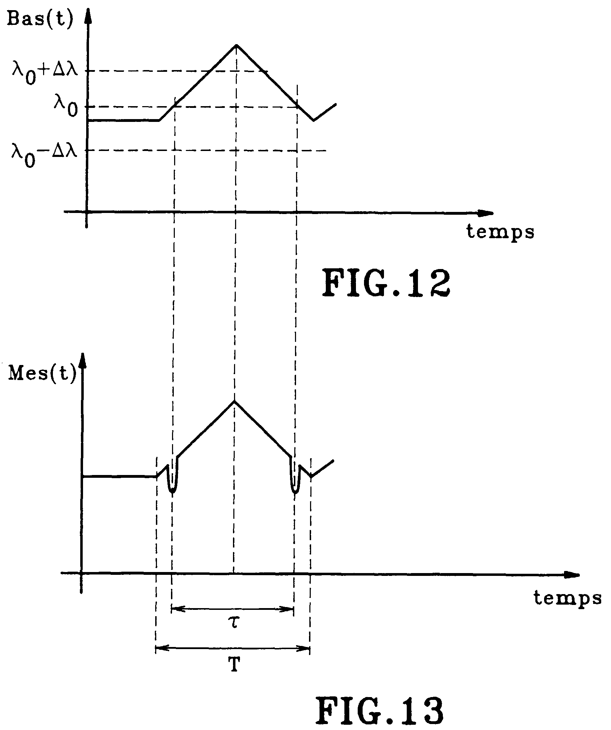

Avantageusement, avec le dispositif de la présente invention, ce temps peut varier au cours du procédé, comme représenté sur les figures 12 et 13 illustrant les signaux Bas(t) et Mes(t) obtenus, sans que cela n'affecte la métrologie de la mesure et il n'est donc pas nécessaire de prévoir un équipement supplémentaire pour l'asservissement de la longueur d'onde d'émission du laser sur la raie du gaz.

## Revendications

1. Procédé de détermination de l'absorption d'un rayonnement électromagnétique de longueur d'onde variable sur une gamme de longueurs d'onde par un gaz qui présente une absorption sélective de ce rayonnement sur ladite gamme de longueurs d'ondes, ledit procédé consistant successivement à:

   - produire deux rayonnements électromagnétiques de même longueur d'onde modulée en fonction du temps sur la gamme de longueurs d'ondes, l'un desdits rayonnements électromagnétiques dit de mesure traversant ledit gaz, l'autre rayonnement électromagnétique étant dit de référence,
   - détecter chacun des rayonnements électromagnétiques de mesure et de référence et les transformer en signaux électriques respectivement dits de mesure Mes(t) et de référence Ref (t), caractérisé en ce que ledit procédé consiste alors à diviser ledit signal électrique de mesure Mes(t) par ledit signal électrique de référence Ref(t) afin d'obtenir un premier signal électrique de division Div1(t) constitué d'une partie AC variable avec le temps et d'une partie DC non variable avec le temps, à séparer lesdites parties AC et DC et à diviser la partie AC du premier signal électrique de division Div1(t) par la partie DC de ce même signal afin d'obtenir un second signal électrique de division Div2(t) représentant uniquement l'absorption du rayonnement électromagnétique par ce gaz.

2. Procédé selon la revendication 1, caractérisé en ce que l'on produit deux rayonnements électromagnétiques à partir d'une source qui émet un rayonnement électromagnétique de base et l'on sépare ledit rayonnement électromagnétique de base afin d'obtenir lesdits rayonnements électromagnétiques de mesure et de référence.

3. Procédé selon la revendication 1 ou 2, caractérisé en ce que le rayonnement électromagnétique est un rayonnement optique.

4. Procédé selon les revendications 2 et 3, caractérisé en ce que la source est une diode laser modulée en courant d'injection et/ou en température.

5. Procédé selon la revendication 1, caractérisé en ce que l'on sépare les parties AC et DC par filtrage électrique.

6. Dispositif de détermination de l'absorption d'un rayonnement électromagnétique de longueur d'onde variable sur une gamme de longueurs d'onde par un gaz qui présente une absorption sélective de ce rayonnement sur ladite gamme de longueurs d'ondes, comprenant

   - des moyens (10) de production de deux rayonnements électromagnétiques de même longueur d'onde modulée en fonction du temps sur la gamme de longueurs d'ondes, l'un desdits rayonnements électromagnétiques dit de mesure traversant ledit gaz, l'autre rayonnement électromagnétique étant dit de référence,
   - des moyens (22, 24) de détection de chacun des rayonnements électromagnétiques de mesure et de référence et de transformation de ces rayonnements en signaux électriques respectivement dits de mesure Mes(t) et de référence Ref (t),

   caractérisé en ce que ledit dispositif comprend en outre

   - des premiers moyens de division (26) du signal électrique de mesure Mes(t) par le signal électrique de référence Ref(t) afin d'obtenir un premier signal électrique de division Div1(t) constitué d'une partie AC variable avec le temps et d'une partie DC non variable avec le temps,
   - des moyens de séparation (28, 30) des parties AC et DC du premier signal électrique de division,
   - et des second moyens de division (32) de la partie AC dudit premier signal électrique de division par la partie DC de ce même signal afin d'obtenir un second signal électrique de division Div2(t) représentant uniquement l'absorption du rayonnement électromagnétique par ce gaz.

7. Dispositif selon la revendication 6, caractérisé en ce que les moyens (10) de production des deux rayonnements électromagnétiques comprennent une source (12) émettant un rayonnement électromagnétique de base Bas(t) et des moyens de séparation (16) dudit rayonnement de base pour obtenir lesdits rayonnements électromagnétiques de mesure et de référence.

8. Dispositif selon la revendication 6 ou 7, caractérisé en ce que le rayonnement électromagnétique est un rayonnement optique.

9. Dispositif selon les revendications 7 et 8, caractérisé en ce que les moyens de séparation sont formés par une lame de verre (16) disposée sur le trajet du rayonnement optique de base Bas(t) suivant une inclinaison avec ce rayonnement et possédant sur une de ses faces (16a) recevant ce signal un dépôt métallique en vue d'augmenter la réflexion de ladite face.

10. Dispositif selon les revendications 7 et 8, caractérisé en ce que la source est une diode laser (12) munie d'un système (14) de modulation de la longueur d'onde optique du rayonnement optique de base par modulation du courant d'injection et/ou de la température.

11. Dispositif selon les revendications 6 et 8, caractérisé en ce que les moyens de détection des rayonnements optiques de mesure et de référence et de transformation de ces rayonnements en signaux électriques sont formés par des photodiodes (22, 24) de même type.

12. Dispositif selon la revendication 6, caractérisé en ce que les moyens de séparation des parties AC et DC du premier signal électrique de division Div1(t) comprennent un premier filtre électrique (28) pour sélectionner la partie AC dudit signal et un second filtre électrique (30) pour sélectionner la partie DC de ce signal.

13. Dispositif selon la revendication 12, caractérisé en ce que le premier filtre électrique (28) est constitué d'une capacité et d'une résistance formant un filtre passe-haut.

14. Dispositif selon la revendication 12, caractérisé en ce que le second filtre électrique (30) est constitué d'une résistance et d'une capacité formant un filtre passe-bas.

**Patentansprüche**

1. Verfahren zur Bestimmung der Absorption einer elektromagnetischen Strahlung mit veränderlicher Wellenlänge in einem Wellenlängenbereich durch ein Gas, das eine selektive Absorption dieser Strahlung in dem Wellenlängenbereich aufweist, wobei das Verfahren darin besteht:

- zwei elektromagnetische Strahlungen mit derselben zeitlich modulierten Wellenlänge in einem Wellenlängenbereich zu erzeugen, wobei eine der elektromagnetischen Strahlungen, die Meßstrahlung genannt wird, das Gas durchquert, während die andere elektromagnetische Strahlung Referenz strahlung genannt wird, und dann

- sowohl die elektromagnetische Meßstrahlung als auch die elektromagnetische Referenz strahlung zu erfassen und sie in elektrische Signale umzusetzen, die Meßsignale Mes(t) bzw. Referenzsignale Ref(t) genannt werden, dadurch gekennzeichnet, daß das Verfahren anschließend darin besteht, das elektrische Meßsignal Mes(t) durch das elektrische Referenzsignal Ref(t) zu dividieren, um ein erstes elektrisches Divisionssignal Div1(t) zu erhalten, das aus einem zeitlich veränderlichen Wechselstromanteil und aus einem zeitlich unveränderlichen Gleichstromanteil gebildet ist, die Wechselstrom- und Gleichstromanteile zu trennen und den Wechselstromanteil des ersten elektrischen Divisionssignals Div1(t) durch den Gleichstromanteil desselben Signals zu dividieren, um ein zweites elektrisches Divisionssignal Div2(t) zu erhalten, das ausschließlich die Absorption der elektromagnetischen Strahlung durch dieses Gas repräsentiert.

2. Verfahren nach Anspruch 1, dadurch gekennzeichnet, daß von einer Quelle, die eine elektromagnetische Grundstrahlung emittiert, zwei elektromagnetische Strahlungen erzeugt werden und daß die elektromagnetische Grundstrahlung geteilt wird, um die elektromagnetischen Meß- und Referenz strahlungen zu erhalten.

3. Verfahren nach Anspruch 1 oder 2, dadurch gekennzeichnet, daß die elektromagnetische Strahlung eine Lichtstrahlung ist.

4. Verfahren nach den Ansprüchen 2 und 3, dadurch gekennzeichnet, daß die Quelle eine Laserdiode ist, deren Injektionsstrom und/oder deren Temperatur moduliert wird.

5. Verfahren nach Anspruch 1, dadurch gekennzeichnet, daß die Wechselstrom- und Gleichstromanteile durch elektrische Filterung getrennt werden.

6. Vorrichtung zur Bestimmung der Absorption einer elektromagnetischen Strahlung mit veränderlicher Wellenlänge in einem Wellenlängenbereich durch ein Gas, das eine selektive Absorption dieser Strahlung in dem Wellenlängenbereich aufweist, mit

- Mitteln (10) zur Erzeugung zweier elektromagnetischer Strahlungen mit gleicher Wellenlänge, die in dem Wellenlängenbereich zeitlich moduliert ist, wobei eine der elektromagnetischen Strahlungen, die Meßstrahlung genannt wird, das Gas durchquert, während die andere elektromagnetische Strahlung Referenzstrahlung genannt wird,
- Mitteln (22, 24) zur Erfassung sowohl der elektromagnetischen Meßstrahlung als auch der elektromagnetischen Referenz strahlung und zur Umsetzung dieser Strahlungen in elektrische Signale, die Meßsignale Mes(t) bzw. Referenzsignale Ref(t) genannt werden,

dadurch gekennzeichnet, daß die Vorrichtung außerdem enthält:

- erste Mittel (26) zur Division des elektrischen Meßsignals Mes(t) durch das elektrische Referenzsignal Ref(t), um ein erstes elektrisches Divisionssignal Div1(t) zu erhalten, das durch einen zeitlich veränderlichen Wechselstromanteil und einen zeitlich unveränderlichen Gleichstromanteil gebildet ist,
- Mittel (28, 30) zum Trennen der Wechselstrom- und Gleichstromanteile des elektrischen Divisionssignals,
- und zweite Mittel (32) zur Division des Wechselstromanteils des ersten elektrischen Divisionssignals durch den Gleichstromanteil desselben Signals, um ein zweites elektrisches Divisionssignal Div2(t) zu erhalten, das ausschließlich die Absorption der elektromagnetischen Strahlung durch dieses Gas repräsentiert.

7. Vorrichtung nach Anspruch 6, dadurch gekennzeichnet, daß die Mittel (10) zur Erzeugung der beiden elektromagnetischen Strahlungen eine Quelle (12), die eine elektromagnetische Grundstrahlung Bas(t) emittiert, sowie Teilungsmittel (16) für die Grundstrahlung, um die elektromagnetische Meßstrahlung und die elektromagnetische Referenzstrahlung zu erhalten, enthalten.

8. Vorrichtung nach Anspruch 6 oder 7, dadurch gekennzeichnet, daß die elektromagnetische Strahlung eine Lichtstrahlung ist.

9. Vorrichtung nach den Ansprüchen 7 und 8, dadurch gekennzeichnet, daß die Teilungsmittel durch ein Glasplättchen (16) gebildet sind, das in dem Weg der Grundlichtstrahlung Bas(t) mit einer Neigung zu dieser Strahlung angeordnet ist und auf einer seiner Flächen (16a), die dieses Signal empfängt, einen metallischen Niederschlag besitzt, um die Reflexion der Fläche zu erhöhen.

10. Vorrichtung nach den Ansprüchen 7 und 8, dadurch gekennzeichnet, daß die Quelle eine Laserdiode (12) ist, die mit einem System (14) zur Modulation der Lichtwellenlänge der Grundlichtstrahlung durch Modulation des Injektionsstroms und/oder der Temperatur versehen ist.

11. Vorrichtung nach den Ansprüchen 6 und 8, dadurch gekennzeichnet, daß die Mittel zur Erfassung der Meßlichtstrahlung und der Referenzlichtstrahlung und zur Umsetzung dieser Strahlungen in elektrische Signale durch Photodioden (22, 24) desselben Typs gebildet sind.

12. Vorrichtung nach Anspruch 6, dadurch gekennzeichnet, daß die Mittel zum Trennen der Wechselstrom- und Gleichstromanteile des ersten elektrischen Divisionssignals Div1(t) ein erstes elektrisches Filter (28) zum Wählen des Wechselstromanteils des Signals und ein zweites elektrisches Filter (30) zum Wählen des Gleichstromanteils dieses Signals enthalten.

13. Vorrichtung nach Anspruch 12, dadurch gekennzeichnet, daß das erste elektrische Filter (28) aus einer Kapazität und einem Widerstand, die ein Hochpaßfilter bilden, gebildet ist.

14. Vorrichtung nach Anspruch 12, dadurch gekennzeichnet, daß das zweite elektrische Filter (30) aus einem Widerstand und einer Kapazität, die ein Tiefpaßfilter bilden, gebildet ist.

**Claims**

1. A method of determining the absorption of electromagnetic radiation of wavelength that is variable over a range of wavelengths by a gas that presents selective absorption of said radiation in said range of wavelengths, the method consisting successively in :

   producing two electromagnetic rays of the same wavelength that is modulated as a function of time over the range of wavelengths, one of said electromagnetic rays passing through said gas and being referred to as a "measurement" ray, while the other electromagnetic ray is referred to as a "reference" ray,
   detecting each of the measurement and reference electromagnetic rays and transforming them into respective electrical signals referred to as a "measurement" signal Mes(t) and as a "reference" signal Ref(t),

characterized in that said method then consists in:

dividing said measurement electrical signal Mes(t) by said reference electrical signal Ref(t), thereby obtaining a first quotient electrical signal Div1(t) made up of a time-varying AC portion and a non-time-varying DC portion, separating said AC and DC portions, dividing the AC portion of the first quotient electrical signal Div1(t) by the DC portion of the same signal in order to obtain a second quotient electrical signal Div2(t) representative solely of the absorption of electromagnetic radiation by said gas.

2. A method according to claim 1, characterized in that the two electromagnetic rays are produced from a source that emits base electromagnetic radiation, which base electromagnetic radiation is split in order to obtain said measurement and reference electromagnetic rays.

3. A method according to claim 1 or 2, characterized in that the electromagnetic radiation is optical radiation.

4. A method according to claims 2 and 3, characterized in that the source is a laser diode which is injection current and/or temperature modulated.

5. A method according to claim 1, characterized in that the AC and DC portions are separated by electrical filtering.

6. A device for determining the absorption of electromagnetic radiation of wavelength variable over a range of wavelengths by a gas that presents selective absorption of said radiation in said range of wavelengths comprising :

means (10) for producing two electromagnetic rays of the same wavelength that is modulated as a function of time over the range of wavelengths, one of said electromagnetic rays passing through said gas and being referred to as the "measurement" ray, the other electromagnetic ray being referred to as the "reference" ray, means (22, 24) for detecting each of the measurement and reference electromagnetic rays and for transforming said rays into respective electrical signals referred to as the "measurement" signal Mes(t) and as the "reference" signal Ref(t),

characterized in that said apparatus further comprises :

first dividing means (26) for dividing the measurement electrical signal Mes(t) by the reference electrical signal Ref(t) so as to obtain a first quotient electrical signal Div1(t) constituted by a time-varying AC portion and a non-time-varying DC portion, separating means (28, 30) for separating the AC and DC portions of the first quotient electrical signal, second dividing means (32) for dividing the AC portion of said first quotient electrical signal by the DC portion of the same signal in order to obtain a second quotient electrical signal Div2(t) representative solely of the absorption of the electromagnetic radiation by the gas.

7. A device according to claim 6, characterized in that the means (10) for producing two electromagnetic rays comprise a source (12) emitting base electromagnetic radiation Bas(t) together with splitting means (16) for splitting said base radiation to obtain said measurement and reference electromagnetic rays.

8. A device according to claim 6 or 7, characterized in that the electromagnetic radiation is optical radiation.

9. A device according to claims 7 and 8, characterized in that the splitting means are constituted by a glass plate (16) placed on the path of the base optical radiation Bas(t) at an inclination to said radiation and possessing on that one of its faces (16a) which receives said signal a metal deposit in order to increase reflection from said face.

10. A device according to claims 7 and 8, characterized in that the source is a laser diode (12) provided with a system (14) for modulating the optical wavelength of the base optical radiation by injection current and/or temperature modulation.

11. A device according to claims 6 and 8, characterized in that the means for detecting the measurement and reference optical rays and for transforming said rays into electrical signals are constituted by photodiodes (22, 24) of the same type.

12. A device according to claim 6, characterized in that the means for separating the AC and DC portions of the first quotient electrical signal Div1(t) comprise a first electrical filter (28) for selecting the AC portion of said signal and a second electrical filter (30) for selecting the DC portion of the signal.

13. A device according to claim 12, characterized in that the first electrical filter (28) is constituted by a capacitor and a resistor constituting a highpass filter.

**14.** A device according to claim 12, characterized in that the second electrical filter (30) is constituted by a resistor and a capacitor forming a lowpass filter.

FIG.1

Bas(t)

$\lambda_0 + \Delta\lambda$

$\lambda_0$

$\lambda_0 - \Delta\lambda$

temps

**FIG.2**

Mes(t)

$\tau$

T

temps

**FIG.3**

Ref(t)

temps

**FIG.4**

$Div_1(t)$

temps

$\tau$

## FIG.5

$C_1$

28

$R_1$

AC

## FIG.6a

$R_2$

30

$C_2$

DC

## FIG.6b

EP 0 670 487 B1

AC

temps

**FIG.7**

DC

$\tau$

temps

**FIG.8**

$Div_2(t)$

temps

$\tau$

absorption optique

**FIG.9**

$\lambda_0 - \Delta\lambda$   $\lambda_0$   $\lambda_0 + \Delta\lambda$   longeur d'onde

**FIG.10**

**FIG.11**

FIG.12

FIG.13